Europäisches Patentamt

European Patent Office

Office européen des brevets

(11) Numéro de publication: **0 429 328 A1**

## (12) DEMANDE DE BREVET EUROPEEN

(21) Numéro de dépôt: 90403090.5

(22) Date de dépôt: 31.10.90

(51) Int. Cl.5: **F27D 3/00**, F27D 5/00, B65G 47/51, B65G 65/00, C21D 9/00

(30) Priorité: 22.11.89 FR 8915336

(43) Date de publication de la demande: 29.05.91 Bulletin 91/22

(84) Etats contractants désignés: AT BE CH DE DK ES GB GR IT LI LU NL SE

(71) Demandeur: STEIN HEURTEY, Société Anonyme: Z.A.I. du bois de l'Epine F-91130 Ris Orangis(FR)

(72) Inventeur: Thieuleux, Gilles 4, Place Voltaire F-91140 Villebon s/Yvette(FR)

(74) Mandataire: Armengaud Ainé, Alain Cabinet ARMENGAUD AINE 3 Avenue Bugeaud F-75116 Paris(FR)

(54) Enceinte de stockage pour produits métallurgiques.

(57) Enceinte de stockage pour produits métallurgiques tels que notamment produits plats ou brames minces du type comportant une ouverture d'entrée, une ouverture de sortie et des rouleaux motorisés disposés dans un plan horizontal, à l'extérieur et à l'intérieur de ladite enceinte pour l'introduction, la circulation et la sortie desdits produits, cette enceinte étant caractérisée en ce qu'elle comporte un châssis mobile (18) disposé à l'intérieur de ladite enceinte (10) et comportant des moyens d'appui (24) répartis dans des plans horizontaux sur plusieurs niveaux de manière à recevoir et stocker horizontalement lesdits produits (P), ces moyens d'appui étant positionnés entre les rouleaux (16), et des moyens (28) permettant de déplacer ledit châssis mobile à l'intérieur de l'enceinte selon un mouvement de translation verticale.

FIG. 2

EP 0 429 328 A1

## ENCEINTE DE STOCKAGE POUR PRODUITS METALLURGIQUES

Cette invention a pour objet une enceinte de stockage pour produits métallurgiques et plus particulièrement pour des produits plats.

On sait que, dans les installations de production de produits plats par coulée continue et notamment dans les ateliers dits de laminage direct de tels produits plats, on recherche un temps minimal de parcours des produits entre la sortie de l'installation de coulée continue et l'entrée des produits dans le laminoir, afin de mettre à profit la valeur latente des produits issus de la coulée. Il est toutefois nécessaire, compte tenu des hétérogénéités de température des produits en sortie de coulée continue, d'homogénéiser les produits et éventuellement d'élever leur température moyenne afin de délivrer à l'entrée du laminoir des produits plats ne présentant pas d'hétérogénéités individuelles ni de différences en niveau de température, les uns par rapport aux autres, malgré les variations de vitesse et de taux de refroidissement de la coulée continue. Pour obtenir de telles homogénéités et reproductibilités de température des produits plats, ceux-ci dans les installations connues sont acheminés de l'installation de coulée continue vers le laminoir au travers d'un four de réchauffage et d'homogénéisation qui assure également la fonction de convoyeur des produits.

Dans le cas de production de produits plats par la mise en oeuvre des procédés dits de coulée de brames minces, les vitesses relatives de coulée et de laminage sont telles qu'il est nécessaire de prévoir des possibilités de stockage ou de mise en attente des produits issus de la coulée, afin de faire face aux arrêts de courte durée, régulièrement connus en exploitation, afin d'ajuster les paramètres de laminage ou pour procéder à des interventions sur l'installation, telles que notamment des changements de rouleaux des cages lamineuses.

Une solution connue, mise en oeuvre par la présente titulaire consiste à créer, par accroissement de la longueur du four de réchauffage et par la gestion des vitesses de circulation des produits plats entre l'installation de coulée et le laminoir, un espace qui correspond à la longueur d'un ou de deux produits soit environ 100 m. Cet espace sert de zone tampon dans le cas d'un arrêt momentané du laminoir, d'une part par synchronisation de la vitesse de la coulée avec celle de l'enfournement des produits et, d'autre part par la mise en va-et-vient des produits à l'extrémité du four.

Cette solution connue présente l'inconvénient d'entraîner un accroissement de la longueur du four de réchauffage et en outre elle s'avère notoirement insuffisante lorsqu'un seul laminoir est alimenté par l'intermédiaire de deux ou plusieurs installations de coulée continue de produits plats minces ou lorsqu'on cherche à stocker un nombre important de brames minces correspondant par exemple à une heure de coulée continue environ soit six brames minces de 50 mètres. A titre d'exemple on peut indiquer que, pour une installation de coulée continue fonctionnant à une vitesse de 5 m/minute et délivrant des produits de 50 m de long, il faut pour stocker deux produits (soit une longueur de 100 m) une longueur disponible de 100 + 50 + (2 + 2) m, pour un stockage qui devra durer 10 minutes en va-et-vient, en cas de poursuite de l'enfournement et compte tenu de la nécessité de maintenir un espace minimal entre les produits plats pour gérer leur va-et-vient.

La présente invention s'est fixée pour objectif d'apporter à ce problème une solution pouvant être appliquée soit à une installation de coulée continue unique soit à une installation comportant plusieurs coulées continues et permettant d'obtenir une capacité de stockage qui, prenant en compte les arrêts programmés du laminoir et de l'installation de coulée d'une part, les arrêts accidentels d'autre part, permet d'accroître la productivité de l'atelier en gérant ces arrêts, de couler l'acier liquide présent dans les répartiteurs même en cas d'arrêt du laminoir et ceci sans augmentation significative de la longueur de l'installation.

En conséquence, la présente invention a pour objet une enceinte de stockage pour produits métallurgiques et plus particulièrement pour produits plats comportant une ouverture d'entrée, une ouverture de sortie et des rouleaux motorisés disposés dans un plan horizontal à l'intérieur et à l'extérieur de ladite enceinte pour l'introduction, la circulation et la sortie desdits produits, cette enceinte de stockage étant caractérisée en ce qu'elle comporte un châssis mobile disposé à l'intérieur de ladite enceinte et comportant des moyens d'appui répartis dans des plans horizontaux sur plusieurs niveaux et conçus de manière à recevoir et stocker horizontalement lesdits produits dans ladite enceinte, ces moyens d'appui étant positionnés entre lesdits rouleaux, l'enceinte comportant en outre des moyens disposés à l'extérieur de l'enceinte et permettant de déplacer ledit châssis mobile à l'intérieur de l'enceinte selon un mouvement de translation verticale.

Selon l'invention, le châssis mobile peut être divisé en deux éléments qui sont disposés en quinconce et mobiles l'un par rapport à l'autre de manière que les mouvements alternatifs d'un élément de châssis par rapport à l'autre permettent de modifier régulièrement les points d'appui des produits stockés sur ledit châssis mobile.

2

Selon un exemple de réalisation de l'enceinte de stockage objet de cette invention, les rouleaux motorisés montés dans l'enceinte pour y assurer la circulation des produits sont portés par une structure mobile selon un mouvement de translation perpendiculaire au sens de déplacement des produits dans l'enceinte de manière à les rétracter par rapport à cette enceinte et au châssis mobile.

En fonction des applications et en particulier selon la localisation de l'enceinte de stockage par rapport au laminoir, l'enceinte selon l'invention peut comporter des éléments de chauffage tels que par exemple des brûleurs, des résistances ou tout autre moyen équivalent tel que la circulation de fumées provenant des fours de réchauffage et son atmosphère peut être contrôlée par exemple grâce aux produits de combustion ou par une mise en légère pression d'azote afin de réduire ou d'éviter l'oxydation des produits plats stockés.

D'autres caractéristiques et avantages de la présente invention ressortiront de la description faite ci-après en référence au dessin annexé qui en illustre des exemples de réalisation dépourvus de tout caractère limitatif. Sur le dessin :

- la figure 1 est une vue schématique en coupe axiale verticale d'un premier exemple de réalisation d'une enceinte de stockage selon l'invention ;
- la figure 2 est une vue en coupe verticale de la figure 1 et ;
- la figure 3 est une vue similaire à la figure 2 d'un second exemple de réalisation d'une enceinte selon l'invention.

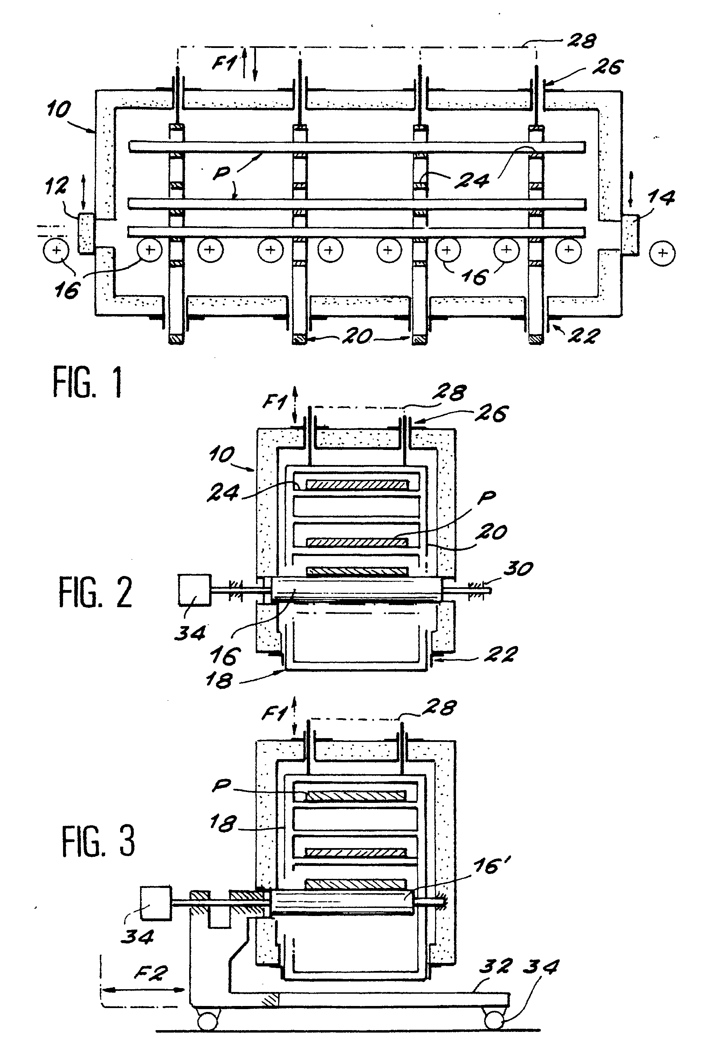

En se référant aux figures 1 et 2, on voit que la présente invention concerne une enceinte désignée dans son ensemble par la référence 10 qui est correctement isolée sur le plan thermique afin de réduire les pertes par les parois. Cette enceinte comporte une entrée et une sortie pour les produits devant être stockés, ou devant traverser cette enceinte, ces entrée et sortie pouvant être obturées par des portes respectivement 12 et 14.

Les produits plats provenant d'une ou de plusieurs installations de coulée, notamment de coulée continue sont acheminés à l'aide de rouleaux motorisés tels que 16 situés à l'intérieur et à l'extérieur de l'enceinte 10, ces rouleaux permettant d'introduire les produits au travers de la porte 12, de les positionner de la manière décrite ci-après sur les moyens de stockage prévus dans l'enceinte et ensuite de les évacuer au travers de la porte de sortie 14.

Les moyens de se prévus par l'invention dans l'enceinte sont réalisés sous la forme d'un châssis mobile désigné dans son ensemble par la référence 18, ce châssis comportant des moyens d'appui tels que 24 qui sont disposés entre les rouleaux 16. Le châssis mobile 18 comporte des moyens permettant de le déplacer à l'intérieur de l'enceinte selon un mouvement de translation verticale, selon les flèches F1. Il comporte un support extérieur 28 guidé au travers de la paroi supérieure de l'enceinte 10 par des moyens de guidage 26, un système de déplacement de conception classique (non représenté sur le dessin) par exemple du type vérin, treuil ou similaire étant prévu pour agir sur le support extérieur 28, afin d'assurer les déplacements en translation du châssis mobile 18 à l'intérieur de l'enceinte 10. A sa partie inférieure, le châssis mobile est pourvu de moyens de guidage tels que 22 au travers de la paroi inférieure de l'enceinte 10.

Le fonctionnement du dispositif ainsi décrit est le suivant : le châssis mobile 18 peut être amené par son système de déplacement de manière que ses moyens d'appui 24 viennent se positionner dans le plan horizontal de déplacement des produits plats au travers de l'enceinte 10 (il s'agit du plan tangent aux rouleaux 16) ce qui permet de faire reposer ledit produit plat P sur des moyens d'appui 24. La mise en action du système de déplacement du châssis mobile permet ensuite de déplacer vers le haut ce châssis mobile 18 et le produit plat P ainsi stocké et de dégager l'ensemble des rouleaux 16 qui peuvent alors recevoir un nouveau produit plat qui peut être ensuite également stock par la poursuite du déplacement ascendant du châssis mobile 18, ou qui peut simplement traverser l'enceinte.

Pour réaliser un déstockage des produits plats, il suffit de faire descendre le châssis mobile 18 dans l'enceinte 10 de manière a amener successivement sur les rouleaux 16 les produits plats stockés sur les moyens d'appui 24, ces rouleaux, grâce à leur motorisation 34 permettant de remettre en circulation le produit plat, celui-ci pouvant être alors évacué de l'enceinte 10 au travers de la porte 14 ou de la porte 12.

Les moyens tels que 22 et 26 prévus pour assurer le guidage du châssis mobile 18 lors de ses déplacements en translation dans l'enceinte 10 peuvent être de tout type connu. Les moyens d'appui tels que 24 peuvent être constitués de fers plats ou de rouleaux pouvant être fixes ou mobiles.

La châssis mobile 18 peut être réalisé sous la forme d'un cadre rigide constitué de fers plats, de profilés ou de tubes, sur lequel sont repris les moyens d'appui 24 des produits stockés ou bien ce châssis mobile peut être réalisé sous la forme d'une structure souple constituée d'éléments tels que chaînes, maillons, etc...

Selon la présente invention, l'enceinte de stockage 10 peut être munie de moyens de chauffage, en fonction des applications et notamment en fonction de la localisation de cette enceinte de stockage par rapport au laminoir. Ces moyens de chauffage peuvent être des brûleurs, des résistances ou tout autre système approprié tel que la circulation de fumées provenant des fours de réchauffage et l'atmosphère de l'enceinte 10 peut être contrôlée par exemple grâce aux produits de combustion ou par une mise en légère pression d'azote, afin de réduire ou d'éviter une oxydation des produits plats stockés.

On comprend que l'invention apporte un système de stockés. vertical permettant de recevoir un nombre important de produits plats P, la seule limitation étant celle apportée par la hauteur de l'enceinte et par le système assurant les déplacements du châssis mobile 18 à l'intérieur de l'enceinte de stockage.

Dans un tel mode de stockage vertical selon la présente invention, on peut envisager deux types de gestion en fonction du type de rouleaux 16 utilisés pour positionner et déplacer les produits plats tels que P dans l'enceinte de stockage 10.

Dans le mode de réalisation illustré par les figures 1 et 2, les rouleaux motorisés tels que 16 comportent des palliers fixes tels que 30. La mode de fonctionnement est tel que le premier produit stocké sur le châssis mobile 18 est le dernier produit extrait de l'enceinte 10 lors du déstockage.

Dans le second exemple de réalisation de l'invention illustré par la figure 3, on utilise des rouleaux motorisés 16' dont les palliers sont portés par une structure mobile réalisée sous la forme d'un chariot 32 dont les roues 34 peuvent se déplacer sur une voie de roulement. Grâce à cette disposition, les rouleaux 16' sont rétractables par rapport à l'enceinte de stockage 10, et par rapport au châssis mobile 18. Il en résulte qu'un produit quelconque peut être extrait du stockage, quelle que soit sa position sur le châssis mobile de stockage. Par exemple, le premier produit stocké peut être le premier produit extrait, il suffit pour cela de reculer le chariot mobile 32 et par conséquent les rouleaux 16', de positionner le châssis mobile 18 de façon que le produit plat recherché soit au niveau de la génératrice supérieure des rouleaux rétractables 16', de réintroduire ensuite les rouleaux 16' dans l'enceinte de stockage 10 par déplacement du chariot mobile 32 et, par un mouvement descendant du châssis mobile 18 d'amener le produit plat à extraire en appui sur les rouleaux 16' qui, grâce à leur motorisation 34 peuvent extraire le produit de l'enceinte de stockage.

Sur la figure 3, les flèches F2 indiquent les mouvements de déplacement possibles du chariot mobile 32 portant les rouleaux motorisés 16'.

En fonction des températures de stockage, les produits plats stockés peuvent être soumis à des déformations plus ou moins importantes dues à leur propre poids. Selon l'invention il est possible d'éviter ces déformations en divisant le châssis mobile de stockage 18 en deux éléments disposés en quinconce et mobiles l'un par rapport à l'autre. Las mouvements alternatifs d'un élément de châssis mobile par rapport à l'autre permettent ainsi de modifier régulièrement les points d'appui des produits plats stockés, de corriger les déformations qui peuvent s'être initialisées tout en réduisant un minimum les échanges thermiques entre les moyens d'appui tels que 24 et les produits stockés P.

L'enceinte de stockage décrite ci-dessus peut être mise en oeuvre en fonction des conditions locales d'exploitation c'est-à-dire en fonction des paramètres suivants :
- les caractéristiques de la coulée continue des produits plats : sa vitesse, son taux d'engagement, les situations transistoires prévues, les variations qualitatives et dimensionnelles des produits ;
- les caractéristiques des moyens de découpe des produits, tels que notamment cisailles, prévus à la sortie de l'installation de coulée continue et à l'entrée du laminoir, ces moyens pouvant par exemple nécessiter un arrêt du produit lors de sa découpe ;
- les caractéristiques du laminoir et notamment sa vitesse relative instantanée par rapport à celle de la coulée continue et à la vitesse de circulation des produits plats dans le ou les fours de réchauffage et d'homogénéisation.

Ainsi l'enceinte de stockage selon l'invention peut être placée dans l'axe de la ou des coulées continues avant le réchauffage ou après l'homogénéisation ou bien dans l'axe du laminoir, soit directement avant ce laminoir en remplissant ainsi la double fonction de zone de stockage et d'homogénéisation ; dans ce cas, le laminoir et l'enceinte de stockage préalable peuvent être placés soit dans l'axe de la coulée soit, quand il existe deux coulées continues, ils peuvent être placés entre les deux lignes de coulée continue et l'on prévoit alors un convoyeur permettant de transférer les produits plats issus de chacune de ces coulées continues de l'axe d'une coulée dans l'axe du système lamoinoir-enceinte de stockage. Le stockage peut être installé hors des axes, en parallèle avec un système d'alimentation comprenant notamment un chariot de transfert qui assure un déplacement en translation de l'une des lignes de coulée soit vers le lamoinoir ou un autre four soit vers le stockage.

Il demeure bien entendu que la présente invention n'est pas limitée aux exemples de réalisation décrits et représentés ici mais qu'elle en englobe toutes les variantes.

## Revendications

1 - Enceinte de stockage pour produits métallurgiques tels que notamment produits plats ou brames minces du type comportant une ouverture d'entrée, une ouverture de sortie et des rouleaux motorisés disposés dans un plan horizontal, à l'extérieur et à l'intérieur de ladite enceinte pour l'introduction, la circulation et la sortie desdits produits, cette enceinte étant caractérisée en ce qu'elle comporte un châssis mobile (18) disposé à l'intérieur de ladite enceinte (10) et comportant des moyens d'appui (24) répartis dans des plans horizontaux sur plusieurs niveaux de manière à recevoir et stocker horizontalement lesdits produits (P), ces moyens d'appui étant positionnés entre les rouleaux (16), et des moyens (28) permettant de déplacer ledit châssis mobile à l'intérieur de l'enceinte selon un mouvement de translation verticale.

2 - Enceinte de stockage selon la revendication 1, caractérisée en ce que lesdits moyens d'appui sont constitués de fers plats.

3 - Enceinte de stockage selon la revendication 1, caractérisée en ce que lesdits moyens d'appui sont constitués de rouleaux fixes ou mobiles.

4- Enceinte de stockage selon l'une quelconque des revendications précédentes, caractérisée en ce que ledit châssis mobile (18) comporte un cadre constitué d'une structure rigide réalisée à partir de fers plats ou de profilés.

5 - Enceinte de stockage selon l'une quelconque des revendications 1 à 3, caractérisée en ce que ledit châssis mobile (18) comporte un cadre constitué d'une structure souple pouvant être réalisée notamment par l'assemblage de moyens tels que chaînes, maillons et similaires.

6 - Enceinte de stockage selon l'une quelconque des revendications précédentes, caractérisée en ce que ledit châssis mobile (18) est divisé en deux éléments disposés en quinconce et mobiles l'un par rapport à l'autre de manière que les mouvements alternatifs d'un élément de châssis par rapport à l'autre permettent de modifier régulièrement les points d'appui des produits stockés.

7 - Enceinte de stockage selon l'une quelconque des revendications précédentes, caractérisée en ce que les rouleaux (16') montés dans l'enceinte de stockage pour assurer la manipulation des produits stockés sont portés par une structure (32) mobile selon un mouvement de translation perpendiculaire au sens de déplacement des produits dans l'enceinte de stockage de façon à les rétracter par rapport à l'enceinte et par rapport au châssis mobile (18).

8 - Enceinte de stockage selon l'une quelconque des revendications précédentes, caractérisée en ce qu'elle comporte des moyens de chauffage tels que notament brûleurs, résistances et en ce que son atmosphère est contrôlée notamment par l'intermédiaire des produits de combustion ou par une mise en légère pression d'azote afin de réduire ou d'éviter une oxydation des produits stockés (P).

9 - Enceinte de stockage selon l'une quelconque des revendications précédentes, caractérisée en ce qu'elle est placée dans l'axe d'une ou de plusieurs installations de coulée continue avant le four de réchauffage ou après le four de réchauffage.

10 - Enceinte de stockage selon l'une quelconque des revendications 1 à 8, caractérisée en ce qu'elle est placée dans l'axe du laminoir.

11 - Enceinte de stockage selon l'une quelconque des revendications 1 à 8, caractérisée en ce qu'elle est placée directement avant le laminoir, ce dernier et l'enceinte de stockage étant placés soit dans l'axe de la coulée continue soit, lorsqu'il existe deux lignes de coulée continue, entre ces deux lignes, un convoyeur étant alors prévu pour transférer les produits plats issus de chacune desdites lignes de l'axe d'une coulée dans l'axe stockage/laminoir.

FIG. 1

FIG. 2

FIG. 3

**Office européen
des brevets**

**RAPPORT DE RECHERCHE
EUROPEENNE**

Numéro de la demande

**EP 90 40 3090**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 528 958 (EDWARDS ALTO VUOTO) <br> * Revendications; figures * <br> − − − | 1 | F 27 D 3/00 <br> F 27 D 5/00 |
| Y | DE-C-3 740 619 (DIDIER) <br> * Revendications; figures * <br> − − − | 1 | B 65 G 47/51 <br> B 65 G 65/00 <br> C 21 D 9/00 |
| A | US-A-4 474 525 (Y. MURAO) <br> − − − | | |
| A | US-A-4 829 656 (W. ROHDE) <br> − − − | | |
| A | EP-A-0 257 540 (BRITISH STEEL) <br> − − − − − | | |

|  |
|---|
| **DOMAINES TECHNIQUES RECHERCHES (Int. Cl.5)** |
| F 27 D <br> B 65 G <br> C 21 D 9 <br> B 21 B <br> C 21 D <br> F 27 B <br> F 26 B |

Le présent rapport de recherche a été établi pour toutes les revendications

| Lieu de la recherche | Date d'achèvement de la recherche | Examinateur |
|---|---|---|
| La Haye | 14 décembre 90 | COULOMB J.C. |